# EUROPEAN PATENT SPECIFICATION

(11) **EP 3 073 560 B1**
(45) Date of publication and mention of the grant of the patent: **06.11.2019**
(21) Application number: 16162636.1
(22) Date of filing: 29.03.2016
(51) Int. Cl.: H01M 8/04119, G06K 9/00, H01M 8/04291, H01M 8/04746, B60L 58/32

(54) **IMAGE PROCESSING APPARATUS, IMAGE CAPTURING APPARATUS, WATER DISCHARGE CONTROL SYSTEM AND VEHICLE**
BILDVERARBEITUNGSVORRICHTUNG, BILDERFASSUNGSVORRICHTUNG, WASSERAUSSTOSSSTEUERUNGSSYSTEM UND FAHRZEUG
APPAREIL DE TRAITEMENT D'IMAGE, APPAREIL DE CAPTURE D'IMAGE, SYSTÈME DE COMMANDE D'ÉVACUATION D'EAU ET VÉHICULE

(30) Priority: 27.03.2015 JP 2015067048
(43) Date of publication of application: 28.09.2016
(73) Proprietor: Kyocera Corporation, Kyoto-shi Kyoto 612-8501 (JP)
(72) Inventor: NAKATA, Takatoshi, Kyoto, 612-8501 (JP); OKADA, Takahiro, Kyoto, 612-8501 (JP)
(74) Representative: SSM Sandmair

(56) References cited:
- JP-A- 2012 075 314
- US-A1- 2006 068 240
- Hermann Winner ET AL: "Handbuch Fahrerassistenzsysteme" In: "Handbuch Fahrerassistenzsysteme", 31 December 2015 (2015-12-31), Springer Vieweg, XP055585492, pages I-XLVIII,

## Description

### TECHNICAL FIELD

This disclosure relates to an image processing apparatus, an image capturing apparatus and a water discharge control system used for a vehicle equipped with a fuel cell, and a vehicle.

### BACKGROUND

In a vehicle equipped with a fuel cell, water produced from electric power generation by a fuel cell has been discharged out of the vehicle. For example, PLC 1 discloses a technique to limit discharge amount of water when the temperature outside the vehicle is below a predetermined temperature to prevent the discharged water from freezing and from having an adverse effect on the environment outside the vehicle. Further, PLC 2 discloses a technique to control discharge of water depending on the distance to an object or a subsequent vehicle detected by using a clearance sonar or a millimeter-wave radar to prevent discharged water from being splashed on people or buildings.

### CITATION LIST

### Patent Literature

PTL 1: JP2006-180631 (A)
PTL 2: JP2012-075314 (A)

### SUMMARY

However, under the conventional technique, various situations around a vehicle cannot always be comprehended in detail. For example, an object present around a vehicle cannot be discriminated by using a clearance sonar or a millimeter-wave radar. Thus, there was a room to improve the control accuracy of discharge of water by comprehending various situations around a vehicle.

It would therefore be helpful to provide an image processing apparatus configured to determine whether or not to limit discharge of water depending on various situations around a vehicle, an image capturing apparatus, a water discharge control system and a vehicle.

In order to solve the above problem, an image processing apparatus, a water discharge control system, and a vehicle according to claims 1-4 are disclosed.

The disclosed image processing apparatus, image capturing apparatus, water discharge control system and vehicle allows determination of whether or not discharge of water should be limited depending on various situations around the vehicle.

### BRIEF DESCRIPTION OF THE DRAWINGS

In the accompanying drawings:
FIG. 1 is an overhead view of a vehicle equipped with a water discharge control system according to a first embodiment of this disclosure;
FIG. 2 is a block diagram illustrating a schematic configuration of the water discharge control system of FIG. 1;
FIG. 3 is a diagram illustrating an example of the information stored by a storage of FIG. 2;
FIG. 4 is a diagram illustrating an example of the information stored by the storage of FIG. 2;
FIG. 5 is an overhead view of the vehicle and an area around the vehicle of FIG. 1;
FIG. 6 is an overhead view of the vehicle and an area around the vehicle of FIG. 1;
FIG. 7 is a diagram illustrating an example of white lines on a travel path recognized by the image processing apparatus of FIG. 2 through the object recognition processing;
FIG. 8 is a flow chart illustrating an operation of the water discharge control system of FIG. 1;
FIG. 9 is a flow chart illustrating the processing to determine whether or not to limit discharge of water performed by the image processing apparatus according to the first embodiment of this disclosure;
FIG. 10 is an overhead view of a vehicle equipped with a water discharge control system according to a second embodiment of this disclosure;
FIG. 11 is an overhead view of the vehicle and an area around the vehicle of FIG.8; and
FIG. 12 is a flow chart illustrating the processing to determine whether or not to limit discharge of water performed by the image processing apparatus according to the second embodiment of this disclosure.

### DETAILED DESCRIPTION

Embodiments of this disclosure will be described below with reference to the drawings.

### (First Embodiment)

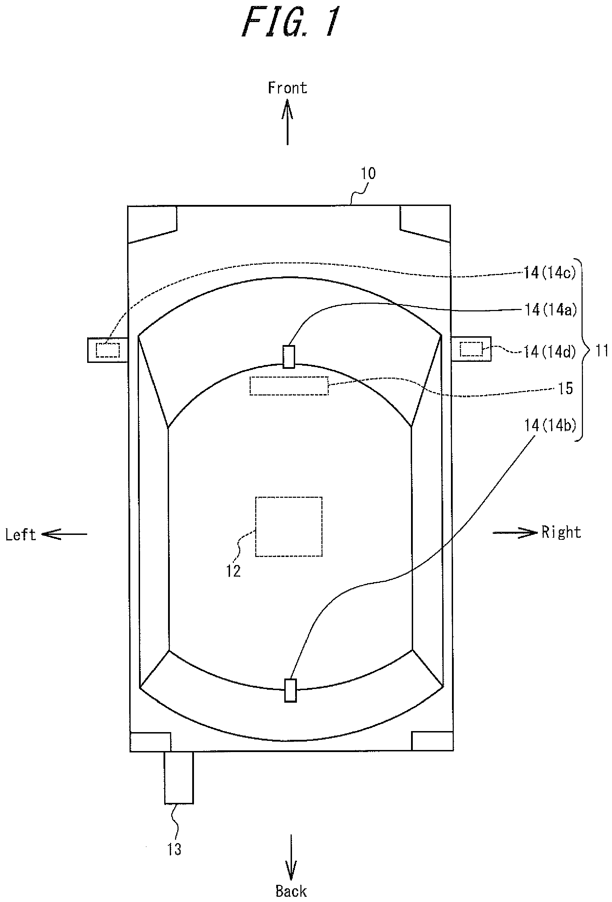

First, a vehicle 10, which is a moving body, and a water discharge control system 11 provided in the vehicle 10 according to the first embodiment of this disclosure are described with reference to FIG. 1.

The vehicle 10 includes a fuel cell 12 and an outlet 13 configured to discharge water produced from electric power generation by the fuel cell out of the vehicle.

The fuel cell 12 supplies electric power produced from the chemical reaction between, for example, hydrogen and oxygen, to the vehicle 10, the water discharge control system 11, or the like. Further, the fuel cell 12 produces water from chemical reaction during electric power generation. The fuel cell 12 is placed in any position of the vehicle 10.

The outlet 13 discharges the produced water out of the vehicle 10. The outlet 13 is placed in any position of the vehicle 10. In this embodiment, the outlet 13 is placed at the rear of the vehicle to allow the water to be discharged toward the rear of the vehicle 10. In addition, the outlet 13 has a valve configured to be controlled to open and close by a control signal outputted from an ECU or an image processing apparatus of the vehicle 10 described later. More specifically, the valve of the outlet 13 is in an open state when no control signal is output, and is in a half open state or a close state when a control signal is output.

The water discharge control system 11 includes at least one image capturing apparatus 14 and an image processing apparatus 15. In this embodiment, the water discharge control system 11 includes four image capturing apparatuses 14. When four image capturing apparatuses 14 are distinguished more clearly, hereinafter they are referred to as a front camera 14a, a rear camera 14b, a left side camera 14c and a right side camera 14d, respectively.

The front camera 14a is placed on the vehicle 10 to allow an image of the area around the front of the vehicle 10 to be captured. Further, the rear camera 14b is placed on the vehicle 10 to allow an image of the area around the rear of the vehicle 10 to be captured. Then, the left side camera 14c is placed, for example, vertically downward on the left door mirror to allow an image of the area around the left side of the vehicle 10 to be captured. Further, the right side camera 14d is placed, for example, vertically downward on the right door mirror to allow an image of the area around the right side of the vehicle 10 to be captured. Each image capturing apparatus 14 includes a lens having a wide angle of view, such as a fish-eye lens, and can capture an image of the area around the vehicle 10 in a wide angle. Further, the image processing apparatus 15 is placed on any position of the vehicle 10.

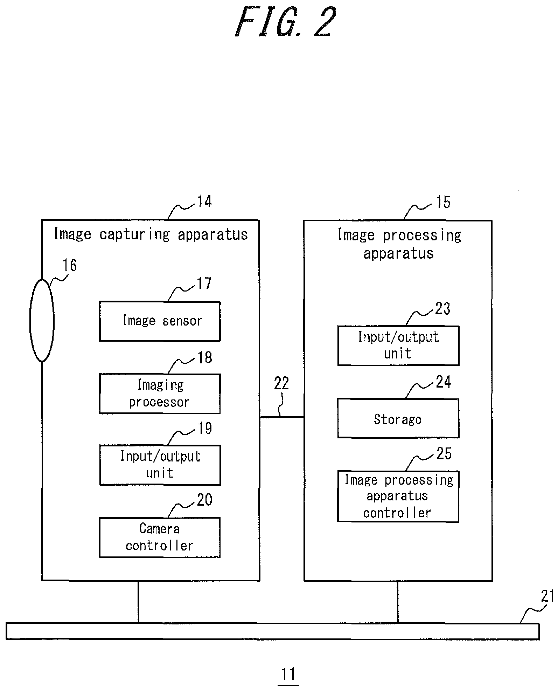

Next, each component of the water discharge control system 11 will be described more specifically with reference to FIG. 2. In FIG. 2, only one image capturing apparatus 14 is illustrated for convenience of description.

The image capturing apparatus 14 includes an optical system 16, an image sensor 17, an imaging processor 18, an input/output unit 19 and a camera controller 20.

The optical system 16 includes a diaphragm and a plurality of lenses, and forms an image of a subject. In this embodiment, the optical system 16 has a wide angle and can form an image of a subject located in an area around the vehicle 10.

The image sensor 17 is, for example, a CMOS image sensor, and captures an image of a subject formed by the optical system 16 and produces a captured image.

The imaging processor 18 includes a processor dedicated to image processing, such as, for example, an AFE and a DSP. The imaging processor 18 performs a predetermined preceding image processing such as CDS, gain adjustment (AGC), A/D conversion (ADC), or the like, to a captured image produced by the image sensor 17. Further, the imaging processor 18 performs a predetermined post image processing such as exposure, color interpolation, or the like, to a captured image.

The input/output unit 19 is an interface configured to input/output the information via a network 21, such as a CAN, or the like, and an exclusive line 22, such as a video signal line, or the like.

The camera controller 20 is a general-purpose CPU configured to perform the specific processing by reading a dedicated micro processor or a specific program. The camera controller 20 controls operation of the entire image capturing apparatus 14. For example, the camera controller 20 controls the operation of the image sensor 17 and produces a captured image periodically at 30 fps, for example. Further, the camera controller 20 outputs a captured image to which the post image processing is performed by the imaging processor 18 to the image processing apparatus 15 via the input/output unit 19 and the network 21, or the exclusive line 22.

The image processing apparatus 15 includes an input/output unit 23, a storage 24 and an image processing apparatus controller 25.

The input/output unit 23 is an interface configured to input/output the information via the network 21 and the exclusive line 22.

The storage 24 is a memory, for example, and is configured to store a variety of information and program required for each kind of operation of the image processing apparatus 15.

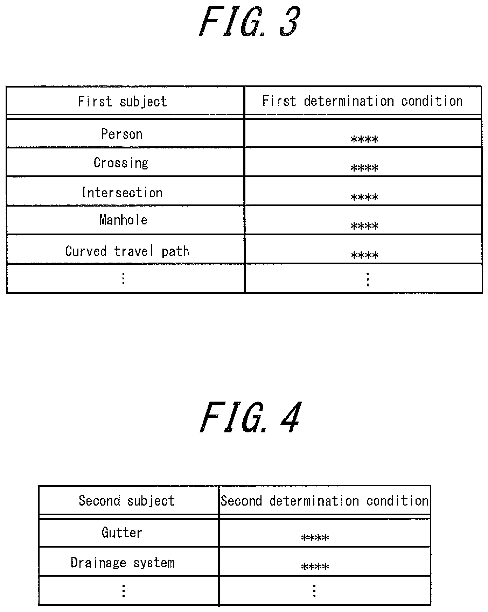

For example, the storage 24 associates the information indicating the first subject with the information indicating the first determination condition as illustrated in FIG. 3, and stores them in advance. The first subject is a subject that is considered, among various subjects that can be recognized by the object recognition processing, that discharge of water out of the vehicle 10 should be limited (controlled or inhibited), when it is present in the vicinity of the vehicle 10, for example. In this embodiment, for example, a person (pedestrian), a crossing, an intersection, a manhole and a curved travel path are defined as the first subject. Further, the first determination condition is a condition for determining whether or not the corresponding first subject and the vehicle 10 have a predetermined positional relationship (a first positional relationship) based on a captured image of an area around the vehicle 10. Here, the first determination condition and the first positional relationship are arbitrarily defined depending on the first subject and the installation position and direction of the image capturing apparatus 14 relative to the vehicle 10. For example, if the first subject is a person, the first determination condition can be a condition for determining whether or not a person is present in the vicinity of the vehicle 10 based on a captured image. In such a case, when it is determined that the first determination condition is satisfied based on a captured image, it is determined that a person is present in the vicinity of the vehicle 10. The first determination condition will be described in detail later.

Further, the storage 24 associates the information indicating the second subject with the information indicating the second determination condition as illustrated in FIG. 4, and stores them in advance. The second subject is a subject that is considered, among various subjects that can be recognized by the object recognition processing, that discharge of water out of the vehicle 10 should be promoted, when it is present in the vicinity of the vehicle 10, for example. In this embodiment, for example, a gutter and a drainage system are defined as the second subject. Further, the second determination condition is a condition for determining whether or not the corresponding second subject and the vehicle 10 have a predetermined positional relationship (a second positional relationship) based on a captured image of an area around the vehicle 10. Here, the second determination condition and the second positional relationship are arbitrarily defined depending on the second subject and the installation position and direction of the image capturing apparatus 14 relative to the vehicle 10. For example, if the second subject is a gutter, the second determination condition can be a condition for determining whether or not a gutter is present in the vicinity of the vehicle 10 based on a captured image. In such a case, when it is determined that the second determination condition is satisfied based on the captured image, it is determined that a gutter is present in the vicinity of the vehicle 10. The second determination condition will be described in detail later.

The image processing apparatus controller 25 illustrated in FIG. 2 is a general-purpose CPU configured to perform specific processing by reading, for example, a dedicated micro processor or a specific program. The image processing apparatus controller 25 controls the operation of the entire image processing apparatus 15.

For example, the image processing apparatus controller 25 obtains a captured image outputted by each image capturing apparatus 14 via the network 21 or the exclusive line 22 and the input/output unit 23, and allows the image to be stored and held in the storage 24.

Subsequently the image processing apparatus controller 25 performs the object recognition processing by using the captured image held in the storage 24. In the object recognition processing, various subjects such as, for example, a travel path, a pedestrian, a gutter, or the like, can be recognized by using different object recognition algorithms depending on the subject. A specific example of the object recognition processing will be described later.

Then the image processing apparatus controller 25 determines, depending on the subject recognized by the object recognition processing, whether or not to limit discharge of water produced from electric power generation by the fuel cell 12 out of the vehicle 10. More specifically, the image processing apparatus controller 25 determines that discharge of water should be limited when the first subject recognized by the object recognition processing and the vehicle 10 have the first positional relationship, or the width of the travel path recognized by the object recognition processing is less than the predetermined value. Preferably the image processing apparatus controller 25 stops the determination that discharge of water should be limited when the second subject recognized by the object recognition processing and the vehicle 10 have the second positional relationship. An operation example of the image processing apparatus controller 25 configured to determine whether or not to limit discharge of water depending on the recognized subject will be described specifically below.

### EXAMPLES

### (First Operation Example)

First, the first operation example of the image processing apparatus controller 25 that determines, when a manhole, which is the first subject, recognized by the object recognition processing and the vehicle 10 have the first positional relationship (e.g. a manhole is present in the vicinity of the vehicle), that discharge of water should be limited will be described.

First, the image processing apparatus controller 25 performs the object recognition processing by using each captured image held in the storage 24 and determines whether a manhole, which is the first subject, is recognized or not. In the object recognition processing, any object recognition algorithm for recognizing a manhole in the captured image, such as, for example, a pattern matching, or the like, can be used.

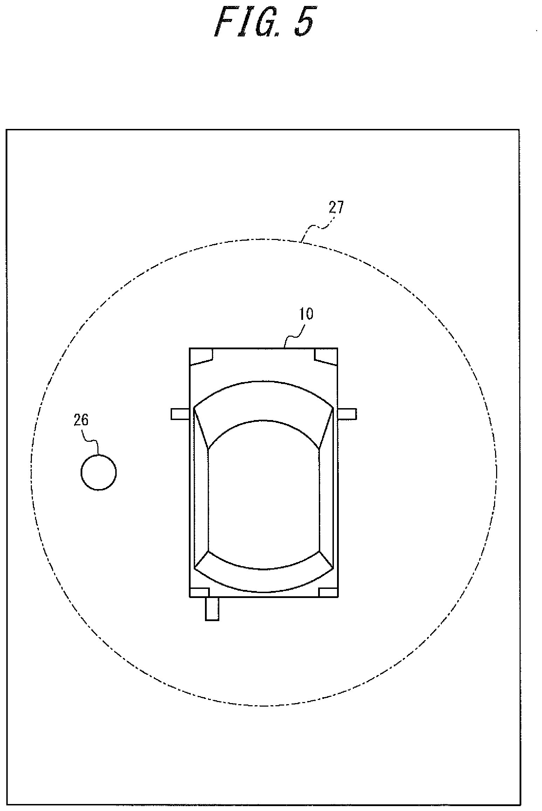

Subsequently, the image processing apparatus controller 25 determines, when a manhole is recognized in at least one captured image, whether or not the manhole and the vehicle 10 have the first positional relationship, for example, whether or not the manhole is present in the vicinity of the vehicle 10. More specifically, the image processing apparatus controller 25 determines whether or not the first determination condition is satisfied, for example, whether or not the condition that the manhole is present within a predetermined distance from the vehicle 10 is satisfied, by using, for example, the captured image in which the manhole is recognized. Then the image processing apparatus controller 25 determines, for example, when the manhole 26 is present within a predetermined distance 27 from the vehicle 10, that is, the first determination condition is satisfied, as illustrated in FIG. 5, that the manhole 26 is present in the vicinity of the vehicle 10, then the manhole 26 and the vehicle 10 have the first positional relationship.

Subsequently, the image processing apparatus controller 25 determines, when the manhole and the vehicle 10 have the first positional relationship, that the discharge of water from the outlet 13 of the vehicle 10 should be limited.

Then, in response to the result of the determination that discharge of water should be limited, the image processing apparatus controller 25 outputs a reference signal to the network 21 via the input/output unit 23. The reference signal includes, for example, the information used by the ECU of the vehicle 10 to determine whether or not to output a control signal. For example, the reference signal includes the information indicating that a control signal that allows a valve of the outlet 13 to be in a half open state or a close state should be outputted and the information indicating that the manhole and the vehicle 10 have the first positional relationship, or the like. Alternatively, the image processing apparatus controller 25 may output, instead of a reference signal, a control signal that allows the valve of the outlet 13 to be in a half open state or a close state. In this manner, when the manhole and the vehicle 10 have the first positional relationship, the ECU or the image processing apparatus controller 25 outputs a control signal, thereby allowing the valve of the outlet 13 to be in a half open state or a close state, and thus discharge of water out of the vehicle 10 from the outlet 13 is limited.

Preferably the image processing apparatus controller 25 stops the determination that discharge of water should be limited when the second subject (e.g. a gutter) recognized by the object recognition processing and the vehicle 10 have the second positional relationship (e.g. the second subject is present in the vicinity of the vehicle 10), which will be described more specifically below.

The image processing apparatus controller 25 performs, when determining that the first subject and the vehicle 10 have the first positional relationship, the object recognition processing by using each captured image held in the storage 24, and determines whether or not a gutter, which is the second subject, is recognized. In the object recognition processing, any object recognition algorithm for recognizing a gutter in a captured image, such as, for example, a pattern matching, is used.

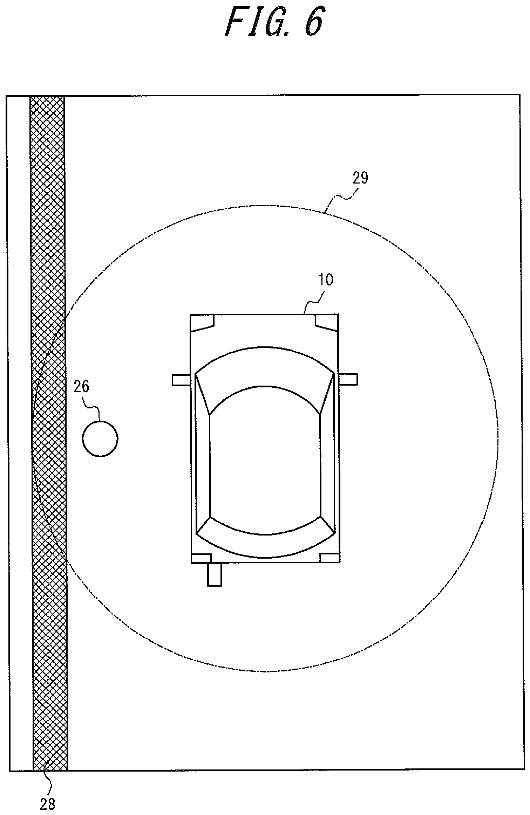

Subsequently the image processing apparatus controller 25 determines, when a gutter is recognized in at least one captured image, whether or not the gutter and the vehicle 10 have the second positional relationship, for example, whether or not the gutter is present in the vicinity of the vehicle 10. More specifically, the image processing apparatus controller 25 determines whether or not the second determination condition is satisfied, that is, whether or not the condition that the gutter is present within a predetermined distance from the vehicle 10 is satisfied by using, for example, a captured image in which the gutter is recognized. Then the image processing apparatus controller 25 determines, when the gutter 28 is present within a predetermined distance 29 from the vehicle 10 as illustrated in FIG. 6, for example, that is, when the second determination condition is satisfied, that the gutter 28 is present in the vicinity of the vehicle 10 and the gutter 28 and the vehicle 10 have the second positional relationship.

Then, the image processing apparatus controller 25 stops the determination that discharge of water from the outlet 13 of the vehicle 10 should be limited when the gutter and the vehicle 10 have the second positional relationship. In this manner, for example, even if the manhole and the vehicle 10 have the first positional relationship, when the gutter and the vehicle 10 have the second positional relationship, the ECU or the image processing apparatus controller 25 does not output a control signal, which allows the valve of the outlet 13 to be in an open state, and thus water is discharged out of the vehicle 10 from the outlet 13.

Here, the image processing apparatus controller 25 may stop the determination of whether or not a second subject is recognized when determining that a specific first subject and the vehicle 10 have the first positional relationship. For example, even if a gutter, which is the second subject, is present in the vicinity of the vehicle 10, if a person is present in the vicinity of the vehicle 10, discharged water may splash on the person. In such a case, discharge of water is not desirable. Therefore, a subject (e.g. a person) on which direct splashing of discharged water is desired to be suppressed is defined as a specific first subject, thus discharge of water can be limited even if a gutter is present in the vicinity of the vehicle 10, for example.

### (Second Operation Example)

Next, the second operation example of the image processing apparatus controller 25 configured to determine that discharge of water should be limited when a curved travel path, which is the first subject, recognized by the object recognition processing and the vehicle 10 have the first positional relationship (e.g. the curved travel path is present ahead (direction of travel) of the vehicle 10) will be described.

First, the image processing apparatus controller 25 performs the object recognition processing by using an image captured by the front camera 14a and held in the storage 24 to determine whether or not an index extending along the travel path is recognized. In this embodiment, the index is two white lines located apart from each other in the width direction of the travel path. However, the index can be borders with sidewalks located on both sides of the travel path in the width direction, for example. In the object recognition processing, any object recognition algorithm for recognizing an index in a captured image, such as a white line detection algorithm that employs, for example, edge point detection and Hough conversion, is used. In this embodiment, the image processing apparatus controller 25 recognizes that a travel path is present around the vehicle 10 when two white lines are recognized.

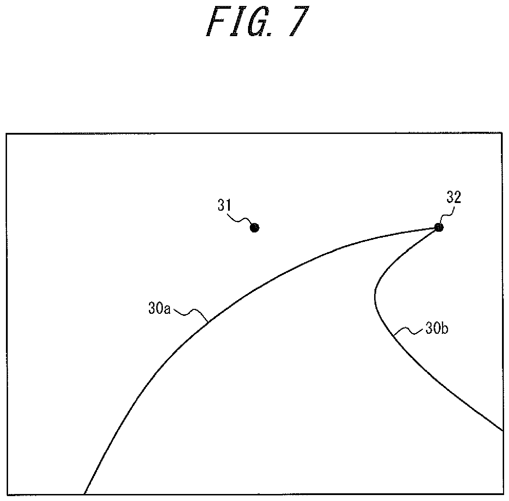

Subsequently, the image processing apparatus controller 25 calculates, when two white lines 30a and 30b are recognized in the captured image as illustrated in FIG. 7, the distance between a first vanishing point 31 and a second vanishing point 32, which is an intersection of the two white lines, 30a and 30b, in a captured image. The first vanishing point 31 is a point where two white lines on the travel path intersect with each other in the captured image when the front camera 14a captures an image of a travel path extending linearly ahead of the vehicle 10. The position of the first vanishing point 31 in the captured image can be calculated in advance depending on the angle of view of the optical system of the front camera 14a and the mounting position, the direction, or the like, of the image capturing apparatus relative to the vehicle. Here, the distance between the first vanishing point 31 and the second vanishing point 32 in the captured image differs depending on the shape of the travel path. For example, when the travel path extends approximately linearly ahead of the vehicle 10, the distance between the first vanishing point 31 and the second vanishing point 32 is less than a predetermined value. On the other hand, the larger the curvature of the travel path extending ahead of the vehicle 10 is, that is, the sharper the curve is, the larger the distance between the first vanishing point 31 and the second vanishing point 32 is. In this embodiment, the image processing apparatus controller 25 recognizes that the travel path extending ahead of the vehicle 10 is a curved travel path when the distance between the first vanishing point 31 and the second vanishing point 32 is not less than the predetermined value.

Subsequently, the image processing apparatus controller 25 determines whether or not the curved travel path, which is the first subject, and the vehicle 10 have the first positional relationship, for example, whether or not the curved travel path is present ahead (direction of travel) of the vehicle 10. More specifically, the image processing apparatus controller 25 determines whether or not the first determination condition is satisfied, that is, for example, when the two white lines 30a and 30b are recognized in the image captured by the front camera 14a, determines whether or not the condition that the distance between the first vanishing point 31 and the second vanishing point 32 is not less than the predetermined value is satisfied. Then the image processing apparatus controller 25 determines, when the distance between the first vanishing point 31 and the second vanishing point 32 in the image captured by the front camera 14a is not less than the predetermined value, that is, the first determination condition is satisfied, that the curved travel path and the vehicle 10 have the first positional relationship.

Subsequently, the image processing apparatus controller 25 determines that discharge of water from the outlet 13 of the vehicle 10 should be limited when the curved travel path and the vehicle 10 have the first positional relationship.

Then, the image processing apparatus controller 25 outputs a reference signal or a control signal to the network 21 via the input/output unit 23 in response to the result of determination that discharge of water should be limited. In this manner, when the curved travel path and the vehicle 10 have the first positional relationship, the ECU or the image processing apparatus controller 25 outputs a control signal, thereby allowing the valve of the outlet 13 to be in a half open state or a close state, and thus discharge of water out of the vehicle 10 from the outlet 13 is limited.

### (Third Operation Example)

Next, the third operation example of the image processing apparatus controller 25 configured to determine that discharge of water should be limited when the width of the travel path recognized by the object recognition processing is less than the predetermined valve will be described.

First, the image processing apparatus controller 25 performs the object recognition processing by using an image captured by at least either the front camera 14a or the rear camera 14b held in the storage 24 to determine whether or not an index extending along the travel path is recognized. In this embodiment, the image processing apparatus controller 25 recognizes that a travel path is present in the vicinity of the vehicle 10 when recognizing two white lines.

Subsequently, the image processing apparatus controller 25 calculates, in a captured image, the distance between two white lines in the width direction of the recognized travel path. In this embodiment, the image processing apparatus controller 25 defines the calculated distance as the width of the travel path.

Subsequently, the image processing apparatus controller 25 determines whether or not the width of the travel path (the calculated distance between the two white lines) is less than the predetermined value.

Subsequently, the image processing apparatus controller 25 determines, when the distance of the travel path is less than the predetermined value, that is, the width of the travel path is narrow, that discharge of water from the outlet 13 of the vehicle 10 should be limited.

Then, the image processing apparatus controller 25 outputs a reference signal or a control signal to the network 21 via the input/output unit 23 in response to the result of determination that discharge of water should be limited. In this manner, when the width of the travel path is less than the predetermined value, the ECU or the image processing apparatus controller 25 outputs a control signal, thereby allowing the valve of the outlet 13 to be in a half close state or a close state, and thus discharge of water out of the vehicle 10 from the outlet 13 is limited.

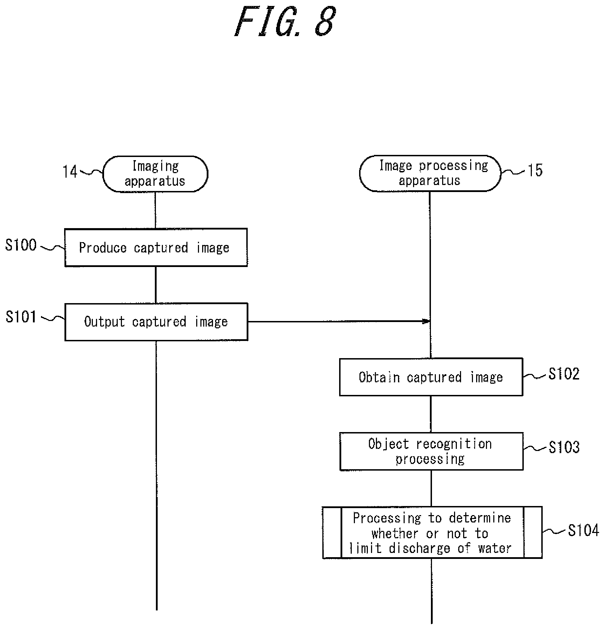

Next, an operation example of the discharge control system 11 according to this embodiment will be described with reference to the flow chart illustrated in FIG. 8. This operation is performed, for example, in each frame of captured image produced by the image capturing apparatus 14.

Step S100: First, the image capturing apparatus 14 captures an image of an area around the vehicle 10 to produce a captured image.

Step S101: Subsequently, the image capturing apparatus 14 outputs the captured image of step S100 to the image processing apparatus 15 via the input/output unit 19 and the network 21 or the exclusive line 22.

Step S102: Next, the image processing apparatus 15 obtains the captured image of step S101 via the network 21 or the exclusive line 22 and the input/output unit 23, then stores and holds it in the storage 24.

Step S103: Subsequently, the image processing apparatus 15 performs the object recognition processing by using the captured image held in the storage 24 at step S102. In the object recognition processing, various subjects such as, for example, a travel path, a pedestrian, a gutter, or the like, can be recognized by using different object recognition algorithms depending on the subject.

Step S104: Then the image processing apparatus 15 performs determination processing to determine, depending on the subject recognized by the object recognition processing of step S103, whether or not to limit discharge of water produced from electric power generation by the fuel cell 12 out of the vehicle 10.

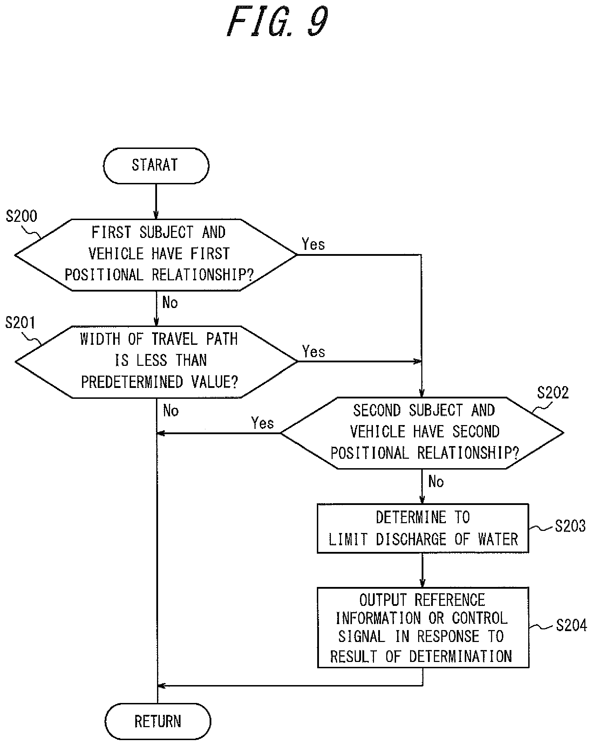

Next, the determination processing to determine whether or not to limit discharge of water performed by the image processing apparatus 15 will be described with reference to the flow chart illustrated in FIG. 9. This processing is performed at the above mentioned step S104.

Step S200: First, the image processing apparatus controller 25 determines whether or not the first subject that can be recognized by the object recognition processing at step S103 of FIG. 8 and the vehicle 10 have the first positional relationship. When the first subject and the vehicle 10 have the first positional relationship (Yes at step S200), the process proceeds to step S202 of FIG. 9. On the other hand, when the first subject and the vehicle 10 don't have the first positional relationship (No at step S200), the process proceeds to step S201.

Step S201: When the first subject and the vehicle 10 don't have the first positional relationship at step S200 (No at step S200), the image processing apparatus controller 25 determines whether or not the width of the travel path is less than the predetermined value based on the index (e.g. two white lines) extending along the travel path that can be recognized by the object recognition processing at step S103 of FIG. 8. When the width of the travel path is less than the predetermined value (Yes at step S201), the process proceeds to step S202 of FIG. 9. On the other hand, when the width of the travel path is not less than the predetermined value (No at step S201), the image processing apparatus controller 25 ends the determination processing without determining that discharge of water should be limited.

Step S202: When the first subject and the vehicle 10 have the first positional relationship at step S200 (Yes at step S200), or when the width of the travel path is less than the predetermined value at step S201 (Yes at step S201), the image processing apparatus controller 25 determines whether or not the second subject that can be recognized by the object recognition processing at step S103 of FIG. 8 and the vehicle 10 have the second positional relationship. When the second subject and the vehicle 10 have the second positional relationship (Yes at step S202), the image processing apparatus controller 25 ends the determination processing without determining that discharge of water should be limited. On the other hand, when the second subject and the vehicle 10 don't have the second positional relationship (No at step S202), the process proceeds to step S203.

Step S203: When the second subject and the vehicle 10 don't have the second positional relationship at step S202 (No at step S202), the image processing apparatus controller 25 determines that discharge of water should be limited.

Step S204: Then the image processing apparatus controller 25 outputs a reference signal or a control signal to the network 21 via the input/output unit 23 in response to the result of determination at step S203.

In this manner, the image processing apparatus 15 according to the first embodiment performs the object recognition processing by using a captured image of an area around the vehicle 10, and determines, depending on the recognized subject, whether or not to limit discharge of water produced from electric power generation by the fuel cell 12 out of the vehicle 10, thereby allowing determination whether or not discharge of water should be limited depending on the various situations around the vehicle 10.

More specifically, the image processing apparatus 15 determines that discharge of water should be limited when the first subject recognized by the object recognition processing and the vehicle 10 have the first positional relationship, or the width of the travel path is less than the predetermined value. Here, a person (pedestrian), a crossing, an intersection, a manhole and a curved travel path are defined as the first subject, thereby allowing adverse effects of water discharged out of the vehicle 10 on the vehicle exterior environment, such as, for example, splashing discharged water on a person, slippage of a person or the other vehicles due to discharged water, or the like, to be reduced.

Further, the image processing apparatus 15 stops the determination that the discharge of water should be limited when the second subject recognized by the object recognition processing and the vehicle 10 have the second positional relationship. Here, for example, if a gutter or a drainage system is present in the vicinity of the vehicle 10, discharged water may easily flow into the gutter or the drainage system, thus it is not likely that the vehicle exterior environment suffers adverse effects. Therefore, a gutter and a drainage system are defined as the second subject, thereby allowing the image processing apparatus 15 to determine the situation where substantially there is no problem even if water is discharged out of the vehicle 10.

### (Second Embodiment)

Next, a second embodiment of this disclosure will be described. The vehicle according to the second embodiment is different from that of the first embodiment in that it includes a plurality of outlets. Hereinafter the components that are the same as those of the first embodiment are each assigned the same reference sign and descriptions thereof are omitted.

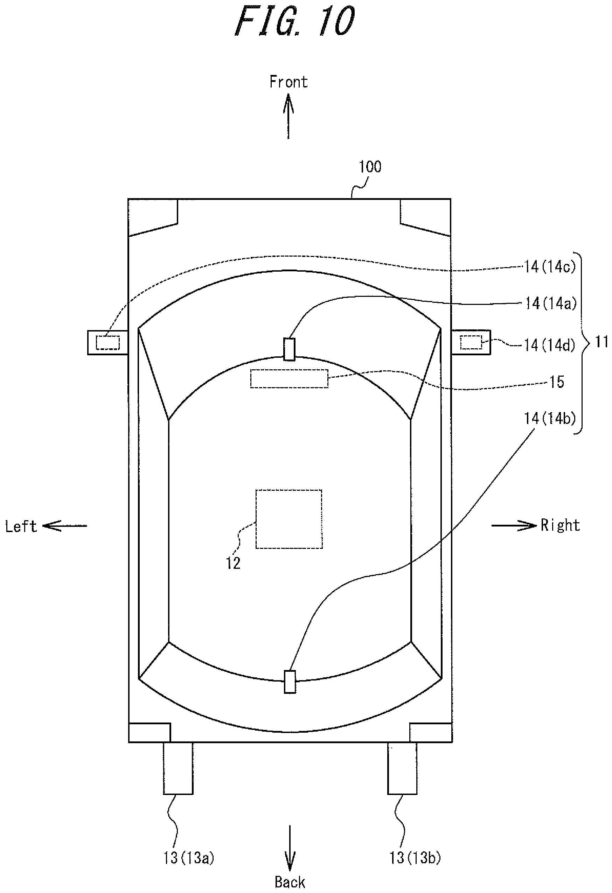

First, a vehicle 100 and a water discharge control system 11 provided to the vehicle 100 according to the second embodiment of this disclosure are described with reference to FIG. 10.

The vehicle 100 includes a fuel cell 12 and a plurality of outlets 13 configured to discharge water produced from electric power generation by the fuel cell 12 out of the vehicle 100. The fuel cell 12 is the same as that of the first embodiment. In this embodiment, two outlets 13 are placed respectively at the rear left and the rear right of the vehicle to allow water to be discharged toward the rear of the vehicle. Hereinafter, when the two outlets 13 are particularly distinguished from each other, an outlet placed at the rear left of the vehicle is referred to as an outlet 13a and that placed at the rear right is referred to as an outlet 13b.

The water discharge control system 11 includes at least one image capturing apparatus 14 and an image processing apparatus 15. The image capturing apparatus 14 is the same as that of the first embodiment. In this embodiment, the water discharge control system 11 has four image capturing apparatuses 14. Hereinafter when the four image capturing apparatuses 14 are particularly distinguished from each other, they are referred to as a front camera 14a, a rear camera 14b, a left side camera 14c and a right side camera 14d, respectively.

The image processing apparatus 15 includes an input/output unit 23, a storage 24 and an image processing apparatus controller 25. The input/output unit 23 and the storage 24 are the same as those of the first embodiment.

The image processing apparatus controller 25 is a general-purpose CPU configured to perform specific processing by reading, for example, a dedicated microprocessor or a specific program. The image processing apparatus controller 25 controls operation of the entire image processing apparatus 15.

For example, the image processing apparatus controller 25 obtains, as with the first embodiment, a captured image outputted by each image capturing apparatus 14 via the network 21 or the exclusive line 22 and the input/output unit 23 and stores and holds it in the storage 24. Subsequently, the image processing apparatus controller 25 performs the object recognition processing by using the captured image held in the storage 24.

Then the image processing apparatus controller 25 determines, depending on the positional relationship between the subject recognized by the object recognition processing and the vehicle 100, whether or not to limit discharge of water out of the vehicle 100 from the outlet 13, for each of the plurality of outlets 13. More specifically, the image processing apparatus controller 25 determines, when the first subject recognized by the object recognition processing and the vehicle 100 have the first positional relationship, that discharge of water out of the vehicle 100 from at least one outlet 13 out of the plurality of outlets 13 should be limited depending on the installation position of the plurality of outlets 13 on the vehicle 100.

An operation example of the image processing apparatus controller 25 that determines, when a manhole, which is the first subject, recognized by the object recognition processing, and the vehicle 100 have the first positional relationship (e.g. the manhole is present in the vicinity of the vehicle 100), that discharge of water out of the vehicle 100 from at least one outlet out of the plurality of the outlets 13 should be limited will be described below.

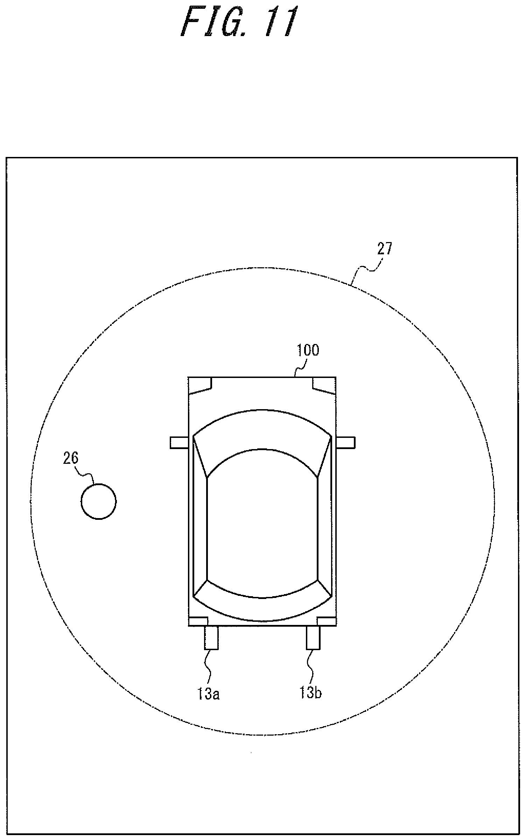

First, as with the first embodiment, the image processing apparatus controller 25 performs the object recognition processing by using each captured image held in the storage 24, and determines whether or not the manhole, which is the first subject, is recognized. Subsequently, the image processing apparatus controller 25 determines, when a manhole is recognized in at least one captured image, that whether or not the manhole and the vehicle 100 have the first positional relationship, that is, for example, whether or not the manhole is present in the vicinity of the vehicle 100. More specifically, the image processing apparatus controller 25 determines whether or not the first determination condition is satisfied, that is, for example, determines whether or not the condition that the manhole is present within a predetermined distance from the vehicle 100 is satisfied, by using a captured image in which the manhole is recognized. Then the image processing apparatus controller 25 determines, as illustrated in FIG. 11, for example, when the manhole 26 is present within the predetermined distance 27 from the vehicle 100, that is, the first determination condition is satisfied, that the manhole is present in the vicinity of the vehicle 100, and the manhole and the vehicle 100 have the first positional relationship.

Subsequently, when the manhole recognized by the object recognition processing and the vehicle 100 have the first positional relationship, the image processing apparatus controller 25 selects at least one outlet 13 from which discharge of water should be limited, for example, in ascending order of the distance to the recognized manhole 13, depending on the installation position of the plurality of outlets 13 on the vehicle 100. Alternatively, the image processing apparatus controller 25 selects, for example, at least one outlet 13 whose distance to the manhole is less than the predetermined distance. For example, as illustrated in FIG. 11, when the manhole 26 is present on the left side of the vehicle 100, at least the outlet 13a placed at the rear left of the vehicle 100 is selected.

Subsequently, the image processing apparatus controller 25 determines that discharge of water from the selected outlet 13 should be limited,

Then the image processing apparatus controller 25 outputs a reference signal to the vehicle 100 via the input/output unit 23 and the network 21 in response to the result of determination that discharge of water should be limited. For example, a reference signal includes the information indicating that a control signal that allows the selected outlet 13 to be in a half open state or a close state should be output and the information indicating that the manhole and the vehicle 100 have the first positional relationship, or the like. Alternatively, the image processing apparatus controller 25 may output, instead of a reference signal, a control signal that allows the selected outlet 13 to be in a half open state or a close state. In this manner, when the manhole and the vehicle 100 have the first positional relationship, the ECU or the image processing apparatus controller 25 outputs a control signal, thereby allowing the valve of the selected outlet 13 to be in a half open state or a close state, and discharge of water out of the vehicle 100 from the selected outlet 13 is limited.

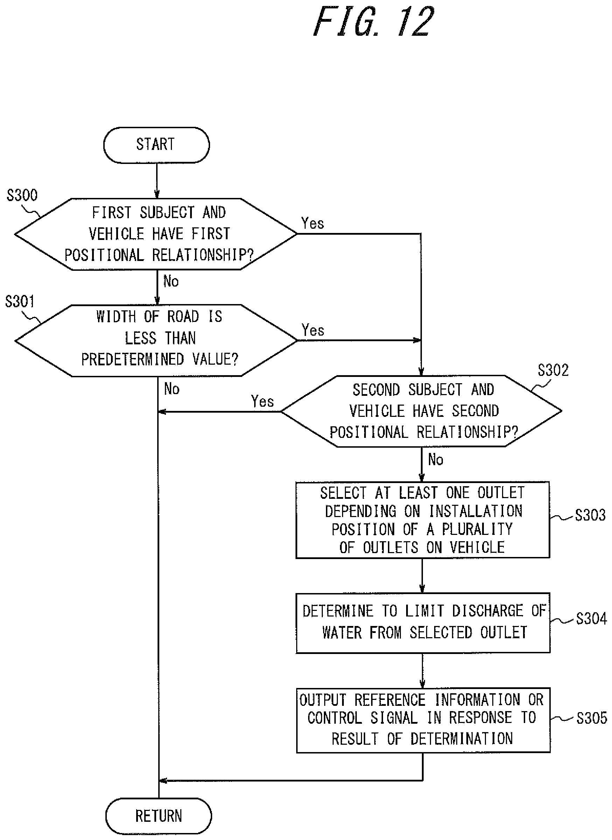

Next, the processing to determine whether or not to limit discharge of water performed by the image processing apparatus 15 will be described with reference to the flow chart illustrated in FIG. 12. This processing is performed at step S104 after steps S100 to S103 (see FIG. 8) of the above-described first embodiment is performed by the water discharge control system 11.

Steps S300 to S302: First, the image processing apparatus controller 25 performs the same processing of steps S200 to S202 illustrated in FIG. 9.

Step S303: When the second subject and the vehicle 100 don't have the second positional relationship at step S302 (No at step S302), the image processing apparatus controller 25 selects at least one outlet 13 from which discharge of water should be limited depending on the installation position of the plurality of outlets 13 on the vehicle 100. Alternatively, the image processing apparatus controller 25 selects at least one outlet 13 whose distance to the first subject, for example, is less than the predetermined distance.

Step S304: Subsequently, the image processing apparatus controller 25 determines that discharge of water from the outlet 13 selected at step S303 should be limited.

Step S305: Then the image processing apparatus controller 25 outputs a reference signal or a control signal to the vehicle 100 via the input/output unit 23 and the network 21 in response to the result of determination at step S304.

In this manner, the image processing apparatus 15 according to the second embodiment determines, for each of the plurality of outlets 13, whether or not to limit discharge of water out of the vehicle 100 from the outlet 13 depending on the recognized subject. Thus the image processing apparatus 15 can, depending on various situations around the vehicle 100, limit discharge of water from some outlets 13 that can have adverse effects on the vehicle exterior environment while allowing discharge of water from the other outlets 13 that are considered to have less adverse effect on the vehicle exterior environment.

Although this disclosure has been described based on embodiments and drawings, it is to be noted that various changes and modifications will be apparent to those skilled in the art based on this disclosure. Therefore, such changes and modifications are to be understood as included within the scope of this disclosure. For example, the functions or the like included in the various means and steps may be reordered in any logically consistent manner. Furthermore, means and members may be combined into one or divided.

Further, in the above described embodiments, the image processing apparatus controller 25 may obtain, for example, the control information including the speed information or the travel distance information, or the like, of the vehicle 10/100 via the network 21 and the input/output unit 23, and determine whether or not the first subject and the vehicle 10/100 have the first positional relationship based on the captured image and the control information. For example, when the image processing apparatus controller 25 recognizes that the first subject (e.g. a crossing) is present ahead of the vehicle 10/100 by using an image captured by the front camera 14a during travel of the vehicle 10/100, it starts obtaining the control information via the network 21 and the input/output unit 23. Subsequently, the image processing apparatus controller 25 calculates, based on the obtained control information, the traveling distance of the vehicle 10/100 from the point in time when the crossing has been recognized. Then the image processing apparatus controller 25 determines that the crossing and the vehicle 10/100 have the first positional relationship when the vehicle 10/100 travels a predetermined distance from the point in time when the crossing has been recognized, and determines that discharge of water should be limited.

Moreover, in the above described embodiments, the image processing apparatus controller 25 may change the first determination condition depending on the control information of the vehicle 10/100. For example, the image processing apparatus controller 25 may, if the first determination condition or the second determination condition is the condition that the first subject or the second subject is present within a predetermined distance from the vehicle 10/100, increase the predetermined distance as the speed of the vehicle 10/100 indicated in the control signal increases.

In addition, in the above described embodiments, although a configuration in which the valve of the outlet 13 is in an open state when a control signal is not outputted and is in a half open state or a close state when a control signal is outputted, the configuration is not limited thereto. For example, the valve of the outlet 13 may be configured so that its open/close state changes or switches in response to the outputted control signal. In such a case, the image processing apparatus 15 outputs, when the first subject and the vehicle 10/100 have the first positional relationship, for example, a first reference signal including the information indicating that a control signal that allows the valve of the outlet 13 to be in a half open state or a close state should be outputted to the vehicle 100 via the input/output unit 23 and the network 21. Then the image processing apparatus 15 outputs a second reference signal including the information indicating that a control signal that allows the valve of the outlet 13 to be in an open state should be output to the network 21 via the input/output unit 23 when the first positional relationship between the first subject and the vehicle 10/100 has been dissolved.

Here, the image processing apparatus controller 25 may determine that the first positional relationship has been dissolved based on, for example, the control information of the vehicle 10/100. For example, the image processing apparatus controller 25 outputs a first reference signal and starts obtaining the control information via the network 21 and the input/output unit 23 when recognizing the presence of the first subject (e.g. a crossing) ahead of the vehicle 10/100 by using an image captured by the front camera 14a, during travel of the vehicle 10/100. Here, discharge of water can be controlled by outputting a first reference signal. Subsequently, the image processing apparatus controller 25 calculates the traveling distance of the vehicle 10/100 from the point in time when the crossing has been recognized, based on the obtained control information. Then the image processing apparatus controller 25 determines, when the vehicle 10/100 has traveled a predetermined distance from the point in time when the crossing has been recognized, that the first positional relationship between the crossing and the vehicle 10/100 has been dissolved. In this manner, for example, the crossing is recognized to be present ahead of the vehicle 10/100, then as the vehicle 10/100 travels, the crossing now locates at the rear of the vehicle 10/100, then when the crossing is sufficiently apart from the vehicle 10/100, the first positional relationship is determined to have been dissolved, and a second reference signal is output. Here, when the second reference signal is outputted, limitation of discharge of water can be cancelled.

Alternatively, the image processing apparatus controller 25 may determine that the first positional relationship has been dissolve based on, for example, images captured by a plurality of image capturing apparatuses 14. For example, the image processing apparatus 15 outputs a first reference signal when recognizing that, during travel of the vehicle 10/100, the first subject (e.g. a crossing) is present ahead of the vehicle 10/100 by using an image captured by the front camera 14a. Subsequently, after recognition of the crossing, the image processing apparatus controller 25 recognizes, as the vehicle 10/100 travels, that the crossing now locates at the rear of the vehicle 10/100 by using an image captured by the rear camera 14b. Then the image processing apparatus controller 25 determines, when determining that the crossing recognized by the image captured by the rear camera 14b and the vehicle 10/100 don't have the first positional relationship, that the first positional relationship between the crossing and the vehicle 10/100 has been dissolved. In this manner, for example, after a crossing is recognized ahead of the vehicle 10/100, as the vehicle 10/100 travels, the crossing now locates at the rear of the vehicle 10/100, then when the crossing is sufficiently apart from the vehicle 10/100, the first positional relationship is determined to have been dissolved, and a second reference signal is output.

Further, in the above described embodiment, the image processing apparatus 15 may obtain the information indicating the present location of the vehicle 10/100 from a navigation system with GPS, for example, and use the information indicating the present location when determining whether or not the first subject and the vehicle 10/100 have the first positional relationship. More specifically, the image processing apparatus 15 may determine that the crossing, which is the first subject, and the vehicle 10/100 have the first positional relationship if the present location indicated by the information obtained from the navigation system is in the vicinity of the crossing and the crossing is recognized by the object recognition processing as well.

Moreover, some components of the water discharge control system 11 according to the above described embodiments may be provided outside the vehicle 10/100. For example, the image processing apparatus 15 or the like may be realized as a communication device such as a cell phone, an external server, or the like, and may be connected wired or wirelessly to the vehicle 10/100 and other components of the water discharge control system 11.

## Claims

1. An image processing apparatus (15), comprising:
an input/output unit (23) configured to obtain a captured image of an area around a vehicle (10) equipped with a fuel cell (12); and
a controller (25) configured to perform object recognition processing by using the captured image and to determine, depending on the object recognized by the object recognition processing, whether or not to limit discharge of water produced from electric power generation by the fuel cell (12) out of the vehicle,
wherein the controller (25) determines, when at least one of a person, a crossing, an intersection, a manhole and a curved travel path recognized by the object recognition processing and the vehicle (10) have a first positional relationship, or when a width of the travel path recognized by the object recognition processing is less than a predetermined value, that discharge of water should be limited **characterized in that**
when a gutter (28) or a drainage system recognized by the object recognition processing and the vehicle (10) have a second positional relationship, the controller (25) stops determination that discharge of water should be limited.

2. An image processing apparatus (15) according to claim 1,
wherein said input/output unit (23) includes an image sensor (17) configured to capture an image of an area around the vehicle (10) equipped with the fuel cell (12) and to produce the captured image.

3. A water discharge control system (11), comprising:
an image capturing apparatus (14) configured to capture an image of an area around a vehicle (10) equipped with a fuel cell (12) and to produce a captured image; and
an image processing apparatus (15) according to claim 1 or 2.

4. A vehicle (10) comprising:
an image capturing apparatus (14) configured to capture an image of an area around a vehicle (10) equipped with a fuel cell (12) and to produce a captured image; and
the image processing apparatus (15) according to claim 1.

## Patentansprüche

1. Bildverarbeitungsvorrichtung (15), die Folgendes umfasst:
eine Eingabe- / Ausgabeeinheit (23), die dafür konfiguriert ist, ein erfasstes Bild eines Bereichs um ein Fahrzeug (10) zu erhalten, das mit einer Brennstoffzelle (12) ausgestattet ist; und
eine Steuerung (25), die dafür konfiguriert ist, eine die Objekterkennungsverarbeitung unter Verwendung des aufgenommenen Bildes durchzuführen und in Abhängigkeit von dem von der Objekterkennungsverarbeitung erkannten Objekt zu bestimmen, ob die Abgabe von Wasser, das bei der Stromerzeugung durch die Brennstoffzelle (12) entsteht, aus dem Fahrzeug begrenzt werden soll oder nicht,
wobei die Steuerung (25) bestimmt, wenn mindestens eine Person, ein Bahnübergang, eine Kreuzung, ein Mannloch und ein gekrümmter Fahrweg, die von der Objekterkennungsverarbeitung erkannt werden, und das Fahrzeug (10) eine erste Positionsbeziehung haben, oder wenn eine Breite des durch die Objekterkennungsverarbeitung erkannten Fahrwegs kleiner als ein vorbestimmter Wert ist, dass das Ablassen von Wasser begrenzt werden sollte, **dadurch gekennzeichnet, dass**
wenn eine Rinne (28) oder ein Abflusssystem, die bzw. das von der Objekterkennungsverarbeitung erkannt wird, und das Fahrzeug (10) eine zweite Positionsbeziehung aufweisen, die Steuerung (25) die Bestimmung stoppt, dass das Ablassen von Wasser begrenzt werden sollte.

2. Bildverarbeitungsvorrichtung (15) nach Anspruch 1,
wobei die Eingabe- / Ausgabeeinheit (23) einen Bildsensor (17) umfasst, der dafür konfiguriert ist, ein Bild eines Bereichs um das mit der Brennstoffzelle (12) ausgestattete Fahrzeug (10) aufzunehmen und das aufgenommene Bild zu erzeugen.

3. Wasserablasssteuersystem (11), das Folgendes umfasst:
eine Bilderfassungsvorrichtung (14), die dafür konfiguriert ist, ein Bild eines Bereichs um ein mit einer Brennstoffzelle (12) ausgestattetes Fahrzeug (10) zu erfassen und ein erfasstes Bild zu erzeugen; und
eine Bildverarbeitungsvorrichtung (15) nach Anspruch 1 oder 2.

4. Fahrzeug (10), das Folgendes umfasst:
eine Bilderfassungsvorrichtung (14), die dafür konfiguriert ist, ein Bild eines Bereichs um ein mit einer Brennstoffzelle (12) ausgestattetes Fahrzeug (10) zu erfassen und ein erfasstes Bild zu erzeugen; und
die Bildverarbeitungsvorrichtung (15) nach Anspruch 1.

## Revendications

1. Appareil de traitement d'image (15), comprenant :
une unité d'entrée/de sortie (23) configurée pour obtenir une image capturée d'une zone autour d'un véhicule (10) équipé d'une pile à combustible (12) ; et
un dispositif de commande (25) configuré pour réaliser un traitement de reconnaissance d'objet en utilisant l'image capturée et pour déterminer, en fonction de l'objet reconnu par le traitement de reconnaissance d'objet, le fait qu'il faut ou non limiter l'évacuation d'eau produite à partir de la production d'énergie électrique par la pile à combustible (12) hors du véhicule,
dans lequel le dispositif de commande (25) détermine, lorsqu'au moins un d'une personne, d'un passage piétons, d'un carrefour, d'une bouche d'égout et d'une voie de déplacement courbe, reconnu par le traitement de reconnaissance d'objet et le véhicule (10) ont une première relation positionnelle, ou lorsqu'une largeur de la voie de déplacement reconnue par le traitement de reconnaissance d'objet est inférieure à une valeur prédéterminée, que l'évacuation d'eau doit être limitée, **caractérisée en ce que**
lorsqu'un caniveau (28) ou un système de drainage reconnu par le traitement de reconnaissance d'objet et le véhicule (10) ont une seconde relation positionnelle, le dispositif de commande (25) arrête la détermination que l'évacuation d'eau doit être limitée.

2. Appareil de traitement d'image (15) selon la revendication 1,
dans lequel ladite unité d'entrée/de sortie (23) inclut un capteur d'image (17) configuré pour capturer une image d'une zone autour du véhicule (10) équipé de la pile à combustible (12) et pour produire l'image capturée.

3. Système de commande d'évacuation d'eau (11), comprenant :
un appareil de capture d'image (14) configuré pour capturer une image d'une zone autour d'un véhicule (10) équipé d'une pile à combustible (12) et pour produire une image capturée ; et
un appareil de traitement d'image (15) selon la revendication 1 ou 2.

4. Véhicule (10), comprenant :
un appareil de capture d'image (14) configuré pour capturer une image d'une zone autour d'un véhicule (10) équipé d'une pile à combustible (12) et pour produire une image capturée ; et
l'appareil de traitement d'image (15) selon la revendication 1.
